# EUROPEAN PATENT APPLICATION

(11) **EP 4 741 580 A1**
(43) Date of publication of application: **13.05.2026**
(21) Application number: 25210275.1
(22) Date of filing: 22.10.2025
(51) Int. Cl.: E02F 3/32, E02F 3/84, E02F 9/22

(54) **WORKING MACHINE**

(30) Priority: 06.11.2024 JP 2024194686; 06.11.2024 JP 2024194690
(71) Applicant: Yanmar Holdings Co., Ltd., Osaka-shi, Osaka (JP)
(72) Inventor: YAMASAKI, Tatsuo, Fukuoka (JP); NAGATA, Hiromu, Fukuoka (JP)
(74) Representative: Novagraaf International SA

(57) **Abstract**

[Problem] There is provided a working machine in which hydraulic hoses and harnesses can be compactly routed.

[Solution] A working machine includes: a lower body; a pair of left and right arms that are attached to the lower body and extend forward; a blade that is attached to a distal end side of an arm; a hydraulic hose that extends from the lower body toward the blade; and a harness that extends from the lower body toward the blade. The hydraulic hose extends along the one arm and is disposed to be shifted from the harness in an upper-lower direction.

## Description

### TECHNICAL FIELD

The present invention relates to a working machine.

### BACKGROUND ART

Conventionally, for example, a construction machine according to Patent Document 1 is known as a working machine such as a hydraulic excavator. The above construction machine includes an external hose and an external harness. The external hose is provided to extend from a lower traveling body toward a blade along one arm of a pair of left and right arms, and is connected to a hydraulic device. The external harness is provided to extend from the lower traveling body toward the blade along the other arm, and is connected to a blade displacement detection device.

### PRIOR ART DOCUMENT

### PATENT DOCUMENT

Patent Document 1: JP-A-2022-13175

### SUMMARY OF INVENTION

### TECHNICAL PROBLEM

Since a hydraulic hose (external hose) and a harness (external harness) are routed separately in a left-right direction in a configuration according to above-described Patent Document 1, it is difficult to compactly route these hydraulic hose and harness.

The present invention has been made to solve the above problems, and an object thereof is to provide a working machine in which hydraulic hoses and harnesses can be compactly routed.

### SOLUTION TO PROBLEM

A working machine according to one aspect of the present invention is a working machine that includes: a lower body; a pair of left and right arms that are attached to the lower body and extend forward; and a blade that is attached to a distal end side of the arm, the working machine includes a hydraulic hose that extends from the lower body toward the blade, and a harness that extends from the lower body toward the blade, and the hydraulic hose extends along the one arm and is disposed to be shifted from the harness in an upper-lower direction.

Furthermore, a working machine according to another aspect of the present invention is a working machine that includes: a lower body; a pair of left and right arms that are attached to the lower body and extend forward; and a blade that is attached to a distal end side of the arm, the working machine includes an opening part through which a hydraulic hose extends from the lower body toward the blade, and a base end part to which a harness extending from the lower body toward the blade is connected, and the opening part and the base end part are disposed to be shifted in an upper-lower direction.

### ADVANTAGEOUS EFFECTS OF INVENTION

According to the above configuration, it is possible to compactly route hydraulic hoses and harnesses.

### BRIEF DESCRIPTION OF DRAWINGS

Fig. 1 is a side view illustrating a schematic configuration of a hydraulic excavator that is an example of a working machine according to the present invention;
Fig. 2 is a block diagram illustrating an electrical configuration for performing blade machine control;
Fig. 3 is a perspective view illustrating a configuration of a front side of a lower traveling body of the above hydraulic excavator;
Fig. 4 is a perspective view illustrating the configuration of the front side of the above lower traveling body in a state where illustration of part of members is omitted;
Fig. 5 is a perspective view illustrating an enlarged support part of a right angle cylinder of a right arm;
Fig. 6 is a perspective view illustrating a housing part attached to the above lower traveling body as viewed from an oblique front side;
Fig. 7 is a front view illustrating the housing part as viewed from the front;
Fig. 8 is a perspective view illustrating the above housing part as viewed from below;
Fig. 9 is a perspective view illustrating a front wall part of the above lower traveling body as viewed from a left arm side;
Fig. 10 is a plan view illustrating a configuration in front of the above lower traveling body;
Fig. 11 is a perspective view illustrating an external appearance of a first holding part constituting a holding part;
Fig. 12A is an exploded perspective view of the above first holding part;
Fig. 12B is an exploded perspective view of the above first holding part;
Fig. 13 is a cross-sectional view illustrating a state where a first harness passes through a passage hole of a covering member, and then the above covering member is folded back; and
Fig. 14 is a perspective view illustrating another configuration example of the above holding part.

### DESCRIPTION OF EMBODIMENTS

An embodiment of the present invention will be described below with reference to the drawings.

### [1. Outline of working machine]

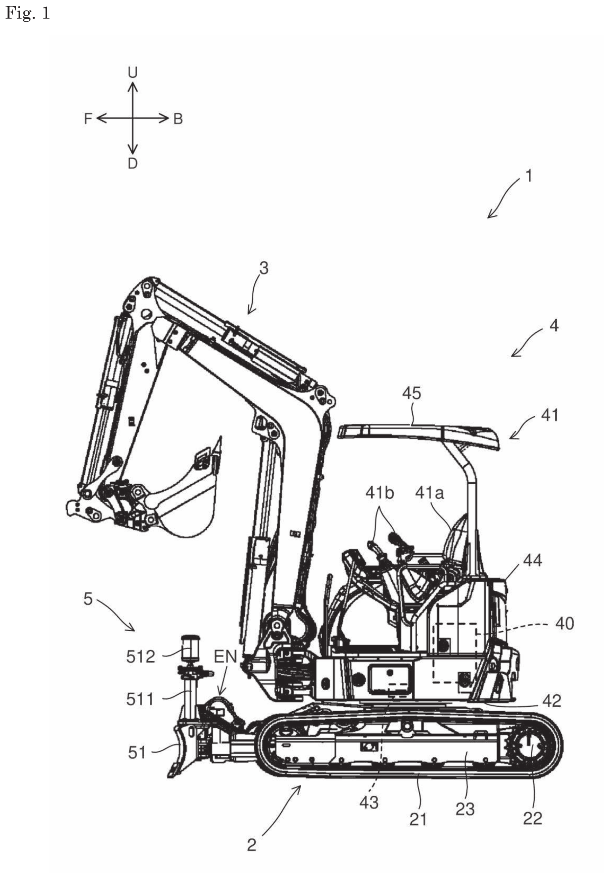

Fig. 1 is a side view illustrating a schematic configuration of a hydraulic excavator 1 that is an example of a working machine according to the present invention. The hydraulic excavator 1 includes a lower traveling body 2, working equipment 3, and an upper turning body 4.

Here, in this description, each direction is described according to the following definition. First, a direction in which an operator (an operator or a driver) sitting on an operator's seat 41a of the upper turning body 4 faces the front is defined as a front, and an opposite direction is defined as a back. Accordingly, in a state where the upper turning body 4 is not turning with respect to the lower traveling body 2 (turning angle: 0°), a front-back direction of the upper turning body 4 matches with a direction in which the lower traveling body 2 moves forward and backward. Furthermore, a left side as viewed from the operator sitting on the operator's seat 41a is referred to as "left", and a right side is referred to as "right". Furthermore, a gravity direction perpendicular to the front-rear direction and the left-right direction is defined as an upper-lower direction, an upstream side in the gravity direction is defined as "up", and a downstream side is defined as "down". The drawings illustrate the hydraulic excavator 1 in a state where the upper turning body 4 is not turning with respect to the lower traveling body 2. Furthermore, in the drawings, as necessary, the front side is denoted by a symbol "F", the rear side is denoted by a symbol "B", the left side is denoted by a symbol "L", the right side is denoted by a symbol "R", the upper side is denoted by a symbol "U", and the lower side is denoted by a symbol "D".

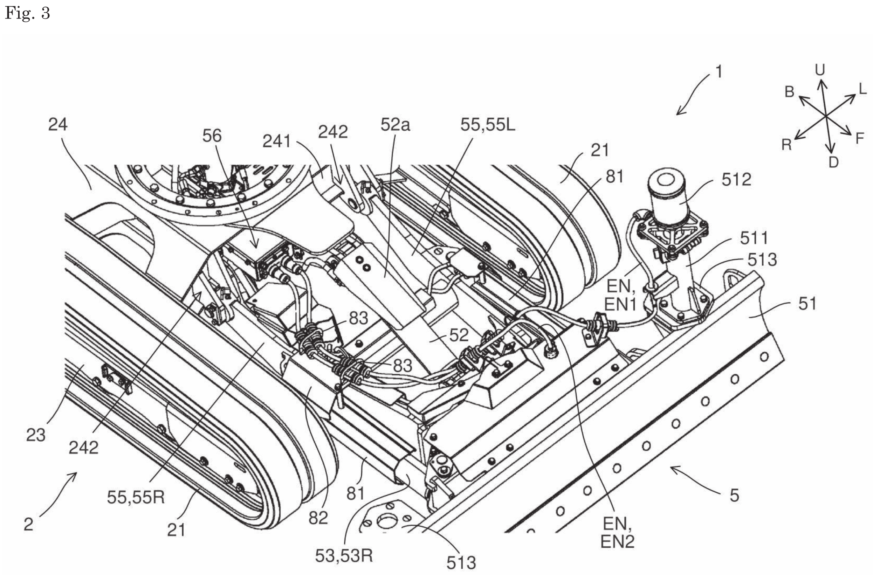

The lower traveling body 2 is a support body (lower body) that supports the upper turning body 4. The lower traveling body 2 includes a pair of left and right crawlers 21 and a pair of left and right traveling motors 22. Each traveling motor 22 is a hydraulic motor. The left and right traveling motors 22 drive the left and right crawlers 21, respectively, so that the hydraulic excavator 1 can be moved forward and backward. The left and right traveling motors 22 are supported by left and right side frames 23, respectively. Each side frame 23 extends in the front-rear direction, is disposed on both of the left and right sides of a center frame 24 (see Fig. 3), and is supported by the center frame 24.

A soil discharging device 5 for performing leveling work is attached to the front side of the lower traveling body 2. The soil discharging device 5 includes a blade 51. A target prism 512 is provided on one side (e.g., left side) in the left-right direction of the blade 51 via a support column 511. The target prism 512 is provided to implement blade machine control. Note that details of the blade machine control including the target prism 512 will be described later.

The working equipment 3 is a working device that performs excavation work of earth and sand. The working equipment 3 is provided to a front part of the upper turning body 4, and performs excavation work by rotating in the upper-lower direction or the front-rear direction.

The upper turning body 4 is an upper body that is located above the lower traveling body 2. The upper turning body 4 is supported turnably with respect to the lower traveling body 2. An operation unit 41, a turning frame 42, a turning motor 43, and a machine room 44 are disposed in the upper turning body 4. The upper turning body 4 turns via a turning bearing (not illustrated) by driving the turning motor 43 that is a hydraulic motor. In addition to the engine 40 that provides power to each unit, a plurality of hydraulic pumps (not illustrated) are disposed to a rear part of the upper turning body 4.

Each hydraulic pump supplies hydraulic oil (pressure oil) to hydraulic motors (e.g., the left and right traveling motors 22 and the turning motor 43) and a hydraulic cylinder via a hydraulic pipe. The above hydraulic cylinder includes a lift cylinder 52 (see Fig. 3 and the like) and the like to be described later. The above hydraulic motors and hydraulic cylinder to which the hydraulic oil is supplied from an arbitrary hydraulic pump to drive are collectively referred to as a hydraulic actuator.

The operator's seat 41a is disposed in the operation unit 41. Various operation levers 41b are disposed around the operator's seat 41a. An operator sits on the operator's seat 41a and operates the operation levers 41b to drive a predetermined hydraulic actuator.

The operation unit 41 includes a canopy 45. The canopy 45 is provided vertically on a rear upper part of the machine room 44 and covers at least an upper side of the operator's seat 41a. Note that a cabin may be provided instead of the canopy 45.

### [2. Regarding blade machine control]

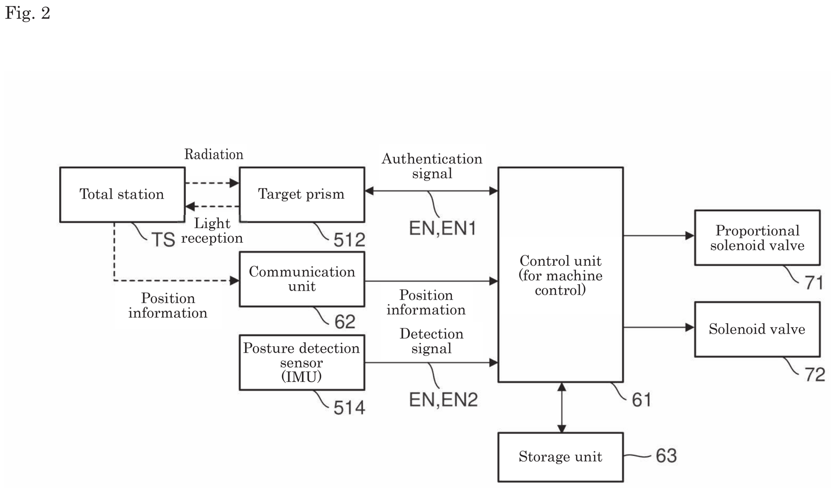

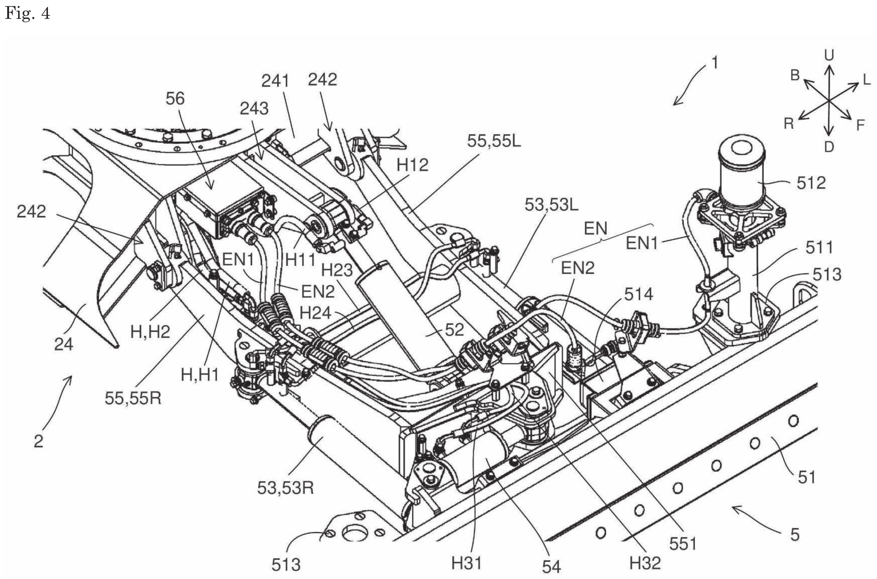

Fig. 2 is a block diagram illustrating an electrical configuration for performing blade machine control in the hydraulic excavator 1. Fig. 3 is a perspective view illustrating a configuration of a front side of the lower traveling body 2. Fig. 4 is a perspective view illustrating the configuration of the front side of the lower traveling body 2 in a state where illustration of part of members in Fig. 3 is omitted.

The blade machine control refers to control of automatically adjusting a posture (a height position and an angle) of the blade 51 based on three-dimensional data of the ground to be worked on and position information of the blade 51. Hereinafter, the blade machine control is also simply referred to as machine control. In the present embodiment, the hydraulic excavator 1 includes the above-described target prism 512 to implement such machine control.

The target prism 512 includes a 360° prism. The 360° prism can reflect light in a direction parallel to incident light even when the light is incident from any direction. The target prism 512 is a target whose position is measured by a total station TS to be described later. The target prism 512 is attached to an upper part of the support column 511 and attached to the blade 51 with the support column 511 interposed therebetween.

As illustrated in Figs. 3 and 4, the above support column 511 is attached to the upper surfaces of mounting bases 513 using a fastening member such as a bolt. The mounting base 513 is provided by welding or the like at two portions on one side (e.g., left side) and the other side (e.g., right side) in the left-right direction with respect to the blade 51. Accordingly, the support column 511 is selectively attachable to one of the left and right mounting bases 513 in a state where the support column 511 holds the target prism 512. Although an example where the support column 511 is attached to the left mounting base 513 as illustrated in Fig. 3 and the like is described in the present embodiment, the support column 511 may be attached to the right mounting base 513.

The total station TS (see Fig. 2) is installed at or near a work site of the hydraulic excavator 1. The total station TS includes a known electronic distance measurement/angle measurement device that uses light. The total station TS irradiates the target prism 512 with light, receives the light reflected by the target prism 512, and thereby measures a vertical angle, a horizontal angle, and a distance at which the target prism 512 is located. Thus, three-dimensional position coordinates of the target prism 512 are acquired by calculation. The total station TS is configured as an automatic tracking type, and has a function of automatically tracking a change in the position of the target prism 512. The total station TS acquires the change in the position of the target prism 512 in real time while tracking the target prism 512.

A control unit 61 illustrated in Fig. 2 is attached to the hydraulic excavator 1. The control unit 61 is a controller for machine control, and is configured as, for example, an electronic control unit that is also referred to as an Electronic Control Unit (ECU). The control unit 61 can acquire the position information of the target prism 512 acquired by the total station TS via a communication unit 62 including an antenna and the like.

The above target prism 512 is connected with the control unit 61 via a first harness EN1. An authentication signal is transmitted and received between the target prism 512 and the control unit 61 via the first harness EN1. Consequently, the control unit 61 can reliably receive only the position information from the specific total station TS via the communication unit 62. Communication between the total station TS and the communication unit 62 is performed wirelessly, for example.

The hydraulic excavator 1 further includes a posture detection sensor 514. The posture detection sensor 514 includes, for example, an Inertial Measurement Unit (IMU). The inertial measurement unit is a unit that includes a three-axis gyro sensor and a three-direction accelerometer.

As illustrated in Fig. 4, the posture detection sensor 514 is attached to the blade 51. In the present embodiment, the posture detection sensor 514 is attached closer to the target prism 512 side (left side) than the center in the left-right direction of the blade 51. The posture detection sensor 514 can detect the position (three-dimensional position) and the acceleration in the left-right direction, the front-rear direction, and the upper-lower direction of the blade 51. Furthermore, an inclination angle in the left-right direction, the front-rear direction, and the upper-lower direction of the blade 51 can be detected based on information of the above acceleration. That is, the posture detection sensor 514 can detect the posture of the blade 51.

As illustrated in Fig. 2, the posture detection sensor 514 is connected with the control unit 61 via a second harness EN2. Consequently, the control unit 61 can acquire a detection signal output from the posture detection sensor 514, that is, posture information of the blade 51 via the second harness EN2.

The above first harness EN1 and second harness EN2 are collectively referred to as a harness EN. In this case, the harness EN can be expressed as follows. That is, the harness EN includes the first harness EN1 connected with the target prism 512, and the second harness EN2 connected with the posture detection sensor 514. The effects described in the present embodiment are particularly effectively obtained in a configuration where the harness EN includes the first harness EN1 and the second harness EN2.

The control unit 61 operates according to an operation program stored in a storage unit 63. The storage unit 63 is a memory that stores various types of information, and includes, for example, a Random Access Memory (RAM), a Read Only Memory (ROM), a hard disk, a Solid State Drive (SSD), a nonvolatile memory, and the like. The storage unit 63 stores, for example, the operation program for machine control, three-dimensional data of a work surface, and the like.

Accordingly, by executing the above operation program, the control unit 61 can control a proportional solenoid valve 71 and a solenoid valve 72 based on the position information of the target prism 512 acquired via the total station TS, the posture information of the blade 51 acquired from the posture detection sensor 514, and the three-dimensional data of the work surface.

The proportional solenoid valve 71 is provided to control a direction switching valve included in a control valve (not illustrated). The above direction switching valve includes the direction switching valve for the lift cylinder 52 illustrated in Fig. 4, and a direction switching valve shared by angle cylinders 53 and a tilt cylinder 54. The former direction switching valve for the lift cylinder 52 refers to a direction switching valve for controlling a flow rate and a flow direction of the hydraulic oil supplied from a hydraulic pump (not illustrated) to the lift cylinder 52. The latter direction switching valve refers to a direction switching valve for controlling the flow rate and the flow direction of the hydraulic oil supplied from the hydraulic pump to the angle cylinder 53 or the tilt cylinder 54. The angle cylinders 53 and the tilt cylinder 54 are connected with the solenoid valve 72 via separate pipes.

The solenoid valve 72 is a switching valve for switching a supply destination of the hydraulic oil from the hydraulic pump to the angle cylinders 53 or the tilt cylinder 54. That is, the solenoid valve 72 switches an oil passage to one of the angle cylinders 53 and the tilt cylinder 54 based on an electric signal (control signal) from the control unit 61.

The lift cylinder 52 illustrated in Fig. 4 is a hydraulic cylinder that lifts and lowers the blade 51 in the upper-lower direction. The angle cylinder 53 is a hydraulic cylinder that swings the left and right end parts of the blade 51 in the front-rear direction. The tilt cylinder 54 is a hydraulic cylinder that swings the left and right end parts of the blade 51 in the upper-lower direction. Accordingly, by controlling the proportional solenoid valve 71 and the solenoid valve 72 based on the position information and the like of the above-described target prism 512, the control unit 61 can expand and contract at least one of the lift cylinder 52, the angle cylinder 53, and the tilt cylinder 54. Consequently, it is possible to move the blade 51 along the work surface by automatically adjusting the position in the upper-lower direction, the inclination angle (angle) in the front-rear direction, and the inclination angle (tilt) in the left-right direction of the blade 51.

### [3. Regarding support structure of blade]

Next, a support structure of the blade 51 will be described. As illustrated in Figs. 3 and 4, the above-described lift cylinder 52 is disposed between a pair of left and right arms 55, that is, between a left arm 55L and a right arm 55R. The left arm 55L and the right arm 55R are attached to the lower traveling body 2 and extend forward.

More specifically, arm support parts 242 are provided to a front wall part 241 of the center frame 24 of the lower traveling body 2. The arm support part 242 has a structure in which the arms 55 are sandwiched between a pair of plate-like members to support the arms 55 rotatably in the upper-lower direction. The arm support parts 242 are provided to protrude forward from different positions in the left-right direction of the front wall part 241. The left arm 55L and the right arm 55R are supported by the left and right arm support parts 242, respectively, and extend toward the blade 51 in the front. The distal ends of the left arm 55L and the right arm 55R are connected with a left end part and a right end part of a coupling part 551 (see Fig. 4) extending in the left-right direction, respectively. The blade 51 is disposed in front of the coupling part 551, and is rotatably attached to the coupling part 551 via a rotation shaft extending in the front-rear direction.

As described above, the hydraulic excavator 1 according to the present embodiment includes the lower traveling body 2 that is the lower body, the pair of left and right arms 55 that are attached to the lower traveling body 2 with the arm support parts 242 interposed therebetween and extend forward, and the blade 51 that is attached to the distal end side of the arms 55 with the coupling part 551 interposed therebetween.

A lift cylinder support part 243 (see Fig. 4) is provided to a center part in the left-right direction of the front wall part 241. The lift cylinder support part 243 is disposed between the left and right arm support parts 242 and is provided to protrude forward from the front wall part 241. The left and right arm support parts 242 are provided at symmetrical positions in the left-right direction with respect to the lift cylinder support part 243.

The lift cylinder support part 243 has a structure in which the one end part (e.g., rod end part) of the lift cylinder 52 is sandwiched between the pair of plate-like members to support the lift cylinder 52 rotatably in the upper-lower direction. The other end part of the lift cylinder 52 is supported on the back surface of the coupling part 551 rotatably in the upper-lower direction. Part of the lift cylinder 52 is covered with a lift cylinder protection cover 52a (see Fig. 3). The lift cylinder protection cover 52a is attached to the lift cylinder support part 243.

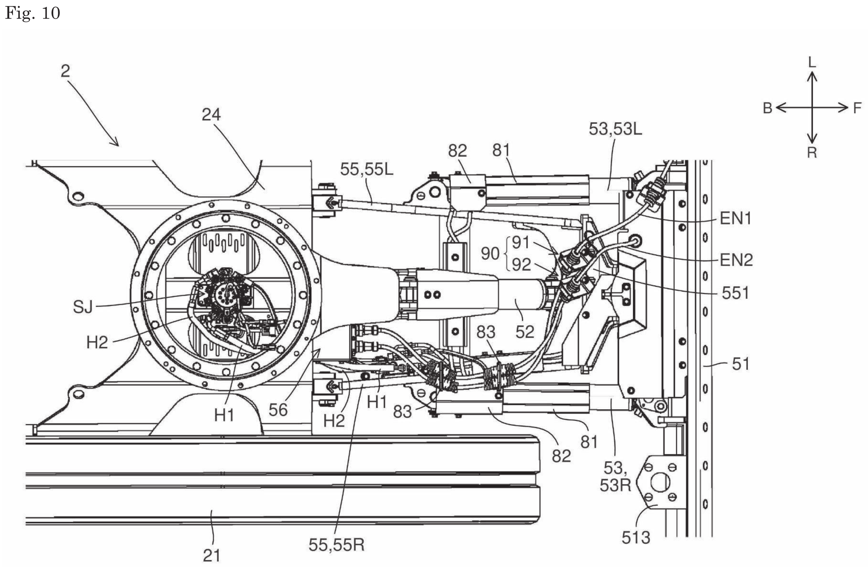

Two hydraulic hoses, that is, lift hydraulic hoses H11 and H12 are connected to the lift cylinder 52. By supplying/discharging (supplying or discharging) the hydraulic oil to and from the lift cylinder 52 via one or the other one of the lift hydraulic hoses H11 and H12, the lift cylinder 52 extends or contracts. The lift hydraulic hoses H11 and H12 pass through predetermined hose insertion holes provided to the front wall part 241 of the center frame 24, and are connected with a swivel joint SJ (see Fig. 10). The swivel joint SJ is provided to extend in the upper-lower direction at the center part of the center frame 24, and is connected with the hydraulic pump via the oil passage.

As illustrated in Fig. 4, the angle cylinder 53 includes a right angle cylinder 53R and a left angle cylinder 53L. The right angle cylinder 53R is disposed on the right side of the right arm 55R. The one end part (rod side end part) of the right angle cylinder 53R is supported by the right arm 55R. The other end part (bottom side end part) of the right angle cylinder 53R is supported on the back surface of the blade 51 and at a position closer to the right side than the center in the left-right direction.

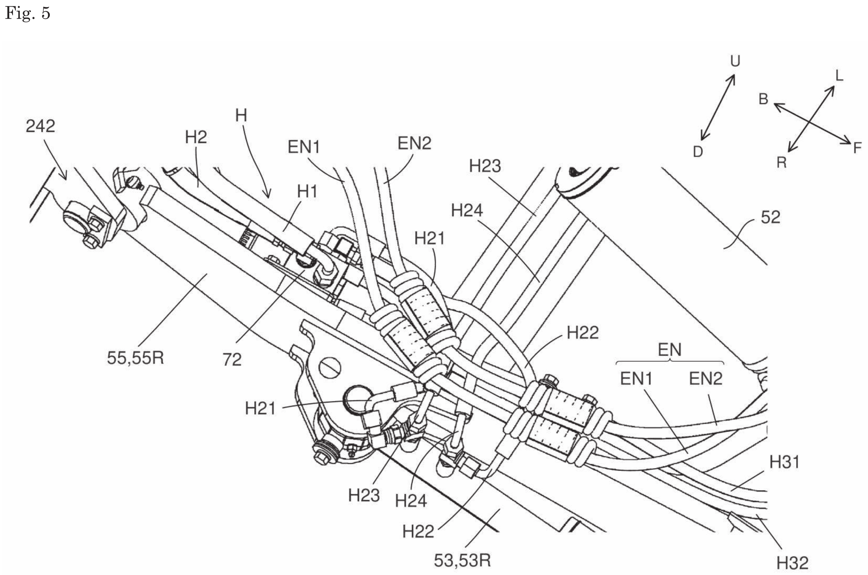

Fig. 5 is a perspective view illustrating an enlarged support part of the right angle cylinder 53R of the right arm 55R. The right angle cylinder 53R and the above-described solenoid valve 72 are connected by two hydraulic hoses, that is, right angle hydraulic hoses H21 and H22. The right angle hydraulic hose H21 is connected to a contraction side connection part of the right angle cylinder 53R. Note that the above contraction side connection part is connected to a space closer to the rod side than a piston in the right angle cylinder 53R. The right angle hydraulic hose H22 is connected to an extension side connection part of the right angle cylinder 53R. Note that the above extension side connection part is connected to a space closer to a bottom side than the piston in the right angle cylinder 53R.

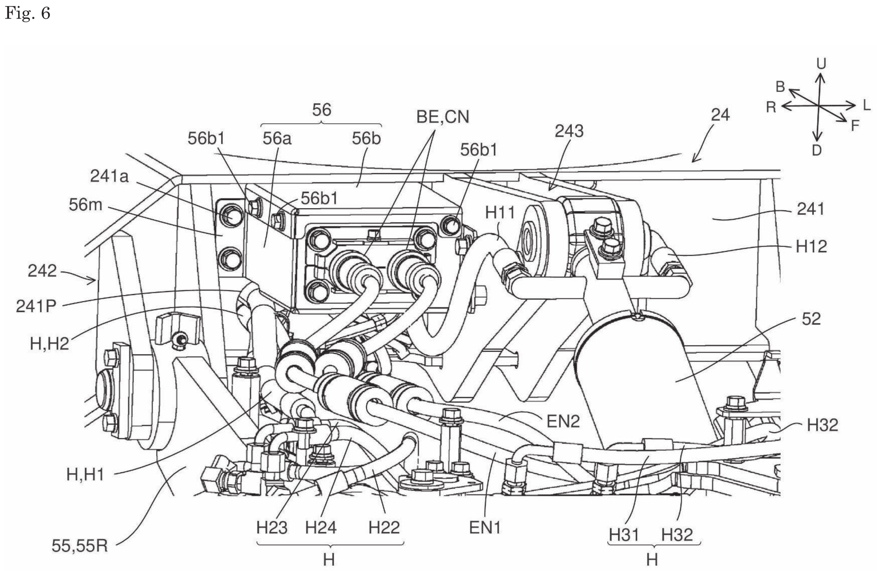

The solenoid valve 72 is connected with the swivel joint SJ (see Fig. 10) with two shared hydraulic hoses H1 and H2 interposed therebetween. The two shared hydraulic hoses H1 and H2 are routed through an opening part 241P (see Fig. 6) provided to the front wall part 241 of the center frame 24. When the oil passage is switched to the angle cylinder 53 side by the solenoid valve 72, the hydraulic oil is supplied to or discharged from the right angle cylinder 53R via one or the other one of the right angle hydraulic hoses H21 and H22. Thus, the right angle cylinder 53R extends or contracts in the front-rear direction.

As illustrated in Fig. 4, the left angle cylinder 53L is disposed on the left side of the left arm 55L. The one end part (rod side end part) of the left angle cylinder 53L is supported by the left arm 55L. The other end part (bottom side end part) of the left angle cylinder 53L is supported on the back surface of the blade 51 and at a position closer to the left side than the center in the left-right direction.

The left angle cylinder 53L is connected with two hydraulic hoses, that is, the left angle hydraulic hoses H23 and H24. The left angle hydraulic hose H23 is connected to an extension side connection part of the left angle cylinder 53L. The left angle hydraulic hose H24 is connected to the contraction side connection part of the left angle cylinder 53L. Furthermore, as illustrated in Fig. 5, the left angle hydraulic hose H23 communicates with the right angle hydraulic hose H21. That is, the left angle hydraulic hose H23 is provided by being branched from the right angle hydraulic hose H21. On the other hand, the left angle hydraulic hose H24 communicates with the right angle hydraulic hose H22. That is, the left angle hydraulic hose H24 is provided by being branched from the right angle hydraulic hose H22.

The respective hydraulic hoses are routed in this manner, so that, when, for example, the hydraulic oil is supplied from the solenoid valve 72 to the right angle cylinder 53R via the right angle hydraulic hose H21, the hydraulic oil is supplied to the left angle cylinder 53L via the right angle hydraulic hose H21 and the left angle hydraulic hose H23. In this case, since the right angle cylinder 53R contracts and the left angle cylinder 53L extends, the blade 51 is inclined in a right direction with respect to a traveling direction of the hydraulic excavator 1. That is, the blade 51 is inclined such that the left end is positioned closer to the front side than the right end.

By contrast with this, when the hydraulic oil is supplied from the solenoid valve 72 to the right angle cylinder 53R via the right angle hydraulic hose H22, the hydraulic oil is supplied to the left angle cylinder 53L via the right angle hydraulic hose H22 and the left angle hydraulic hose H24. In this case, since the right angle cylinder 53R extends and the left angle cylinder 53L contracts, the blade 51 inclines in a left direction with respect to the traveling direction of the hydraulic excavator 1. That is, the blade 51 is inclined such that the right end is positioned closer to the front side than the left end.

The number of the angle cylinders 53 is two (the left angle cylinder 53L and the right angle cylinder 53R) in the present embodiment, yet may be only one among the left and right angle cylinders. In this regard, from a viewpoint of rotating the blade 51 in the front-rear direction in a well-balanced manner, the number of the angle cylinders 53 is desirably two as in the present embodiment.

As illustrated in Fig. 4, the tilt cylinder 54 is disposed between the coupling part 551 and the blade 51 and expands and contracts in the left-right direction. The one end part (e.g., left end part) of the tilt cylinder 54 is supported at the front surface part of the coupling part 551 and at a position closer to an upper side than the rotation axis of the blade 51 (extending in the front-rear direction). The other end part (e.g., right end part) of the tilt cylinder 54 is supported on the back surface of the blade 51 and at a position closer to the right side than the center in the left-right direction.

The tilt cylinder 54 and the solenoid valve 72 are connected by two hydraulic hoses, that is, tilt hydraulic hoses H31 and H32. The tilt hydraulic hose H31 is connected to the bottom side of the tilt cylinder 54. The tilt hydraulic hose H32 is connected to the rod side of the tilt cylinder 54.

Accordingly, when, for example, the hydraulic oil is supplied from the solenoid valve 72 to the tilt cylinder 54 via the tilt hydraulic hose H31, the tilt cylinder 54 extends. Hence, the blade 51 rotates in such a direction that the right end goes down and the left end goes up. By contrast with this, when the hydraulic oil is supplied from the solenoid valve 72 to the tilt cylinder 54 via the tilt hydraulic hose H32, the tilt cylinder 54 contracts. Hence, the blade 51 rotates in such a direction that the right end goes up and the left end goes down.

The above-described lift hydraulic hoses H11 and H12, shared hydraulic hoses H1 and H2, right angle hydraulic hoses H21 and H22, left angle hydraulic hoses H23 and H24, and tilt hydraulic hoses H31 and 32 are also collectively referred to as a hydraulic hose H. In this case, the hydraulic hose H can be expressed as follows.

That is, the hydraulic hose H includes first hydraulic hoses, second hydraulic hoses, and third hydraulic hoses. Here, the first hydraulic hoses refer to the shared hydraulic hoses H1 and H2 connected with the solenoid valve 72 through the opening part 241P (see Fig. 6) of the front wall part 241. The second hydraulic hoses refer to the right angle hydraulic hoses H21 and H22 extending from the solenoid valve 72 toward the angle cylinder 53 (e.g., right angle cylinder 53R). The third hydraulic hoses refer to the tilt hydraulic hoses H31 and 32 extending from the solenoid valve 72 toward the tilt cylinder 54. The effects described in the present embodiment are particularly effectively obtained in a configuration where the hydraulic hose H includes at least the first hydraulic hoses.

### [4. Regarding routing of harnesses and hydraulic hoses]

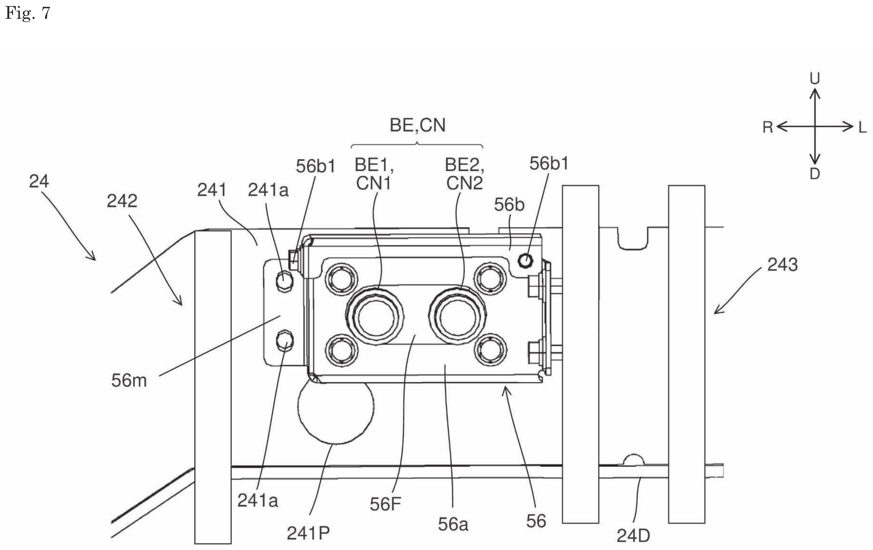

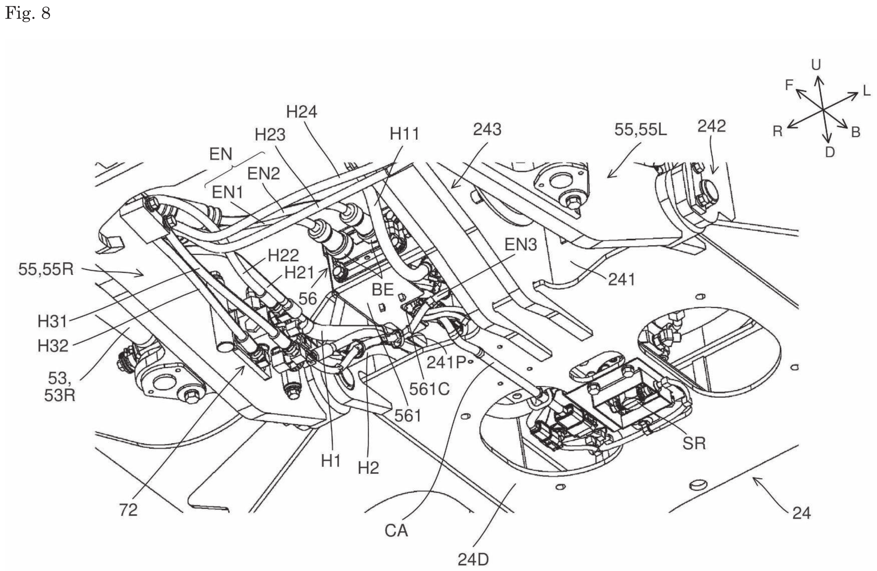

Next, routing of the above-described harness EN and hydraulic hose H will be described with reference to Figs. 6 to 8. Fig. 6 is a perspective view illustrating a housing part 56 to be described later and attached to the lower traveling body 2 as viewed from a diagonal front side. Fig. 7 is a front view illustrating the housing part 56 as viewed from the front. Fig. 8 is a perspective view illustrating the housing part 56 as viewed from below. The lower traveling body 2 includes the above-described front wall part 241.

The front wall part 241 is a wall part that is vertically provided on the front side of a lower surface part 24D (see Fig. 8) of the center frame 24. The front wall part 241 is provided with the opening part 241P. The hydraulic hose H (the shared hydraulic hoses H1 and H2 in particular) connected with the swivel joint SJ extend forward through the opening part 241P (see in particular Fig. 6). As described above, the hydraulic excavator 1 according to the present embodiment includes the opening part 241P through which the hydraulic hose H extends from the lower traveling body 2 (the center frame 24 in particular) toward the blade 51.

The housing part 56 is attached to the front surface of the above front wall part 241. The housing part 56 is formed as, for example, a box body, and is attached to the front wall part 241 using a fastening member 241a such as a bolt. An attachment piece 56m extending in the left-right direction is integrally provided on, for example, the rear surface of the housing part 56. By inserting the fastening member 241a into a hole (not illustrated) provided to the attachment piece 56m and a fastening hole part (not illustrated) provided to the front wall part 241, and engaging the fastening member 241a with a nut (not illustrated) to fasten or loosen, it is possible to easily attach or detach the housing part 56 to and from the front wall part 241. The housing part 56 is attached to the front wall part 241 between, for example, the lift cylinder support part 243 and the right arm support part 242.

As illustrated in Fig. 7, a base end part BE is provided to the front end part 56F of the housing part 56. The base end part BE is a connector CN from which the harness EN is detachable. Accordingly, it can be also said that the connector CN is provided to the front end part 56F of the housing part 56.

The base end part BE includes a first base end part BE1 and a second base end part BE2. The first base end part BE1 is a first connector CN1 to which the first harness EN1 is connected. The second base end part BE2 is a second connector CN2 to which the second harness EN2 is connected. The harness EN is connected to the base end part BE, so that the harness EN is routed to extend from the center frame 24 side of the lower traveling body 2 toward the blade 51 in the front. As described above, the hydraulic excavator 1 according to the present embodiment includes the base end part BE to which the harness EN extending from the lower traveling body 2 (the center frame 24 side in particular) toward the blade 51 is connected.

As illustrated in Fig. 8, the housing part 56 includes a cutout part 561C on a bottom surface 561. Note that, instead of the cutout part 561C, a hole whose surroundings are closed may be provided to the bottom surface 561.

Furthermore, a cable CA is provided to extend to an outer side (lower side) of the lower surface part 24D of the lower traveling body 2. The one end part of the cable CA is connected to a slip ring SR. The slip ring SR is electrically connected with the above-described control unit 61. The other end part of the cable CA is connected to the above base end part BE and on the side opposite to the connection side with the harness EN. Accordingly, the above-described control unit 61 can transmit and receive signals between the target prism 512 and the posture detection sensor 514 via the harness EN, the base end part BE, the cable CA, and the slip ring SR. As described above, the hydraulic excavator 1 includes the cable CA that is provided to extend to the outer side of the lower surface part 24D of the lower traveling body 2.

The above cable CA extends from below the housing part 56 to the inside of the housing part 56 via the cutout part 561C. Furthermore, the cable CA is connected to the base end part BE (connector CN) from the side opposite to the connection side with the harness EN inside the housing part 56. Note that the cable CA is routed by bundling two individual cables. The one individual cable is a cable that connects the slip ring SR and the first base end part BE1. The other individual cable is a cable that connects the slip ring SR and the second base end part BE2.

In the present embodiment, as illustrated in Fig. 7, the opening part 241P and the base end part BE are disposed to be shifted in the upper-lower direction. More specifically, the base end part BE is disposed closer to the upper side than the opening part 241P. As described above, by disposing the opening part 241P and the base end part BE, as illustrated in Fig. 6, the hydraulic hose H (the shared hydraulic hoses H1 and H2 in particular) extending from the opening part 241P toward the blade 51, and the harness EN (the first harness EN1 and the second harness EN2 in particular) connected to the base end part BE and extending toward the blade 51 can be aligned and routed in the upper-lower direction. Consequently, it is possible to collectively, that is compactly route the hydraulic hose H and the harness EN.

In particular, in the configuration where the base end part BE is disposed closer to the upper side than the opening part 241P, the harness EN connected to the base end part BE can be routed closer to the upper side than the hydraulic hose H extending from the opening part 241P to the front. The harness EN is routed closer to the upper side than the hydraulic hose H in this manner, so that a risk is reduced that, even if, for example, the hydraulic hose H is bent, the hydraulic hose H contacts the harness EN. Accordingly, breakage of the harness EN caused by contact with the hydraulic hose H is reduced.

Note that the base end part BE may be disposed closer to the lower side than the opening part 241P. In this regard, in this case, it is desirable to take a measure of, for example, supporting the hydraulic hose H to make it possible to avoid contact with the harness EN.

As illustrated in Fig. 7, the opening part 241P is disposed to be shifted to a lateral side with respect to the base end part BE. More specifically, the opening part 241P is disposed to be shifted to the right side with respect to the base end part BE. At this time, part of the opening part 241P may be disposed closer to the left side than the right end of the first base end part BE1. Furthermore, the entire opening part 241P may be disposed closer to the left side than the right end of the first base end part BE 1. That is, at least part of the opening part 241P may be disposed closer to the right side than the right end of the first base end part BE1. Note that the opening part 241P may be disposed to be shifted to the left side with respect to the base end part BE. By, for example, disposing the housing part 56 close to the right arm support part 242 at the front wall part 241, it is possible to dispose the opening part 241P at a position closer to the left side from just below the second base end part BE2.

When the opening part 241P and the base end part BE are disposed in this manner, it is easy to secure a wide space in the upper-lower direction in front of the base end part BE (on the blade 51 side), and, at the same time, it is easy to secure a wide space in the upper-lower direction in front of the opening part 241P. Consequently, it is easy to perform work of connecting the harness EN to the base end part BE, and work of passing the hydraulic hose H (the shared hydraulic hoses H1 and H2 in particular) through the opening part 241P. Accordingly, the above arrangement of the opening part 241P and the base end part BE is desirable in terms of that improvement in workability is expected.

As illustrated in Fig. 6, in the present embodiment, the opening part 241P and the base end part BE are disposed on the right arm 55R side with respect to the lift cylinder 52. That is, the opening part 241P and the base end part BE are disposed on the one arm 55 side (right arm 55R) of the pair of left and right arms 55 with respect to the lift cylinder 52. Such an arrangement of these opening part 241P and base end part BE is desirable in terms of that collective routing of the hydraulic hose H and the harness EN closer to the one arm 55 side than the lift cylinder 52 can be implemented.

As illustrated in Fig. 6, the hydraulic hose H (e.g., shared hydraulic hoses H1 and H2) extending from the opening part 241P extends forward, that is, toward the blade 51 along the one arm 55 (the right arm 55R in particular). Furthermore, the above hydraulic hose H is disposed closer to the lower side than the harness EN (e.g., the first harness EN1 and the second harness EN2) between the lift cylinder 52 and the one arm 55 (the right arm 55R). Accordingly, it can be said that, in the hydraulic excavator 1 according to the present embodiment, the hydraulic hose H extends along the one arm 55 (the right arm 55R in particular) and is disposed to be shifted from the harness EN in the upper-lower direction.

According to this arrangement, the hydraulic hose H and the harness EN can be collectively disposed closer to the one arm 55 (right arm 55R) side than the lift cylinder 52. That is, the hydraulic hose H and the harness EN are not disposed, for example, in a dispersed manner in the left-right direction. Accordingly, it can be said that even a configuration where the hydraulic hose H extends along the one arm 55 and is disposed to be shifted from the harness EN in the upper-lower direction can implement compact routing of the hydraulic hose H and the harness EN.

Furthermore, in the configuration where the base end part BE is disposed on the right arm 55R side with respect to the lift cylinder 52, the harness EN connected to the base end part BE is disposed on the right arm 55R side with respect to the lift cylinder 52, and extends from the lower traveling body 2 toward the blade 51 in the front. In other words, the harness EN is disposed on the one right arm 55R side of the pair of left and right arms 55, and extends from the lower traveling body 2 toward the blade 51. In this case, the hydraulic hose H and the harness EN can be aligned and disposed in the upper-lower direction along the one arm 55 (e.g., right arm 55R) to implement compact routing.

As illustrated in Fig. 6, in the present embodiment, the housing part 56 is attached to the front wall part 241. As a result, the base end part BE provided to the front end part 56F of the housing part 56 is disposed closer to the front side than the opening part 241P provided to the front wall part 241. In this case, the base end part BE is disposed closer to the upstream side in the insertion direction of the harness EN than the opening part 241P, so that it is easy to insert (connect) the harness EN into the base end part BE. Furthermore, from a viewpoint of implementing attachment and detachment of the harness EN to and from the base end part BE, the base end part BE is desirably configured as the connector CN from which the harness EN is detachable.

In the present embodiment, as illustrated in Fig. 8, the cable CA electrically connected with the harness EN is drawn from the inside of the housing part 56 to the outside (lower side) through the cutout part 561C and routed. In other words, the cable CA extends from below the housing part 56 to the inside of the housing part 56 via the cutout part 561C. Consequently, the cable CA drawn from the inside of the housing part 56 can be routed along the front wall part 241 and the lower surface part 24D. From the viewpoint of implementing such routing of the cable CA, it is desirable to provide the cutout part 561C to the bottom surface 561 of the housing part 56.

Furthermore, by routing the cable CA along the front wall part 241 and the lower surface part 24D, it is possible to route the cable CA without providing to the front wall part 241 a through hole through which the cable CA is passed. Accordingly, in terms of that the front wall part 241 does not need to be provided with an unnecessary through hole, a configuration is desirable where the cable CA is drawn downward from the inside of the housing part 56 and routed along the lower surface part 24D as in the present embodiment. In other words, it is desirable that the cable CA extends from below the housing part 56 to the inside of the housing part 56, and is connected to the connector CN (base end part BE) of the housing part 56 from the side opposite to the connection side with the harness EN.

As illustrated in Figs. 6 and 7, the housing part 56 includes a main body case 56a and a lid part 56b. The main body case 56a is a case whose upper part is opened, and includes the above-described front end part 56F on the front surface. Accordingly, the main body case 56a includes the base end part BE, that is, the connector CN. The lid part 56b covers the main body case 56a from above. The lid part 56b is fixed to the main body case 56a with a fastener 56b1 such as a bolt. The lid part 56b can be detached from the main body case 56a by loosening the fastener 56b1.

By detaching the lid part 56b from the main body case 56a, it is easy to connect the cable CA to the connector CN (from the side opposite to the connection side with the harness EN) inside the housing part 56 (main body case 56a). In this respect, a configuration is desirable where the housing part 56 includes the lid part 56b that is detachable from the main body case 56a.

### [5. Regarding routing of lift hydraulic hose and control harness]

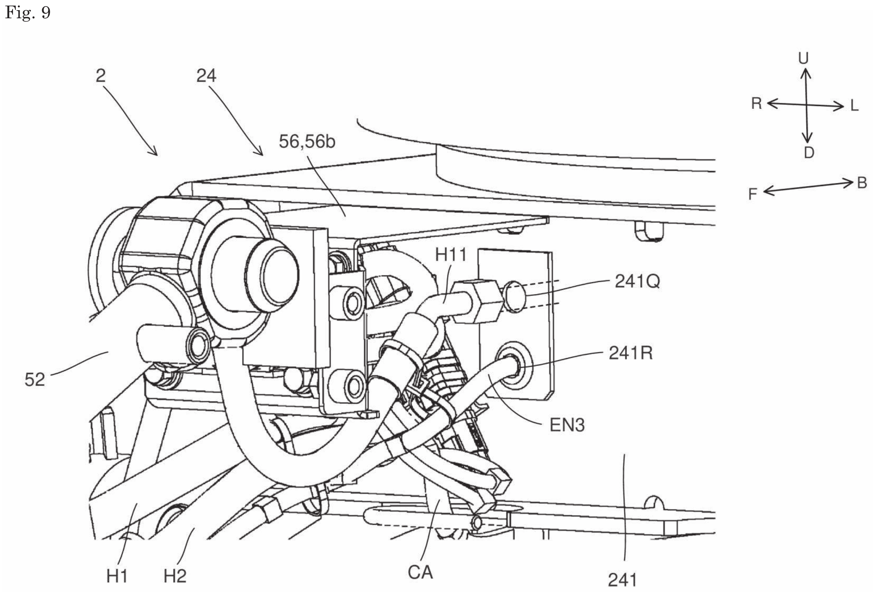

Fig. 9 is a perspective view illustrating the front wall part 241 as viewed from the left arm 55L side. The front wall part 241 is provided with a lift hose insertion hole 241Q and a control harness insertion hole 241R in addition to the above-described opening part 241P. The lift hydraulic hose H11 connected to the lift cylinder 52 is inserted into the lift hose insertion hole 241Q. Accordingly, the lift hydraulic hose H11 extends from the lower traveling body 2 toward the lift cylinder 52 via the lift hose insertion hole 241Q.

A control harness EN3 is inserted into the control harness insertion hole 241R. The control harness EN3 is a solenoid valve control harness that sends an electric signal from the control unit 61 (see Fig. 2) to the solenoid valve 72 (see Fig. 5). The above electric signal is a control signal for switching the oil passage to one of the angle cylinder 53 and the tilt cylinder 54. Accordingly, the control harness EN3 extends from the lower traveling body 2 toward the blade 51 via the control harness insertion hole 241R.

As illustrated in Fig. 9, the lift hose insertion hole 241Q and the control harness insertion hole 241R are disposed to be shifted in the upper-lower direction. More specifically, the control harness insertion hole 241R is disposed just below the lift hose insertion hole 241Q. Accordingly, the lift hose insertion hole 241Q and the control harness insertion hole 241R are disposed at the same position in the left-right direction of the front wall part 241. In this case, the lift hydraulic hose H11 passing through the lift hose insertion hole 241Q and the control harness EN3 passing through the control harness insertion hole 241R are not dispersed in the left-right direction, but are collectively and compactly routed in the upper-lower direction.

Note that, as illustrated in Fig. 8, the control harness EN3 is routed closer to the lower side than the above-described shared hydraulic hoses H1 and H2. In view of this, it can be said that the hydraulic hose H (the shared hydraulic hoses H1 and H2 in particular) may be disposed closer to the upper side than the harness EN (the control harness EN3 in particular).

### [6. Regarding configuration of guiding routing of harnesses]

Next, a configuration of guiding routing of the harness EN connected to the base end part BE will be described with reference to Figs. 3 and 10. Fig. 10 is a plan view illustrating a configuration in front of the lower traveling body 2.

The hydraulic excavator 1 according to the present embodiment further includes protection members 81, support parts 82, and harness guides 83. The protection member 81 is a protection cover that protects the angle cylinder 53. The protection members 81 are provided to meet the left and right angle cylinders 53, and are disposed so as to cover the corresponding angle cylinders 53.

More specifically, the right protection member 81 extends in the front-rear direction along the right angle cylinder 53R, and is disposed so as to cover the upper side, the lower side, and the right side of the right angle cylinder 53R. The left protection member 81 extends in the front-rear direction along the left angle cylinder 53L (see Fig. 10), and is disposed so as to cover the upper side, the lower side, and the left side of the left angle cylinder 53L.

The support part 82 is formed by bending a plate-like member, and is attached to the left and right protection members 81 by bolts or the like. The harness guide 83 is supported by the support part 82. In the present embodiment, the harness guide 83 is formed in an elliptical ring shape having a long hole, and is attached to the upper surface of the support part 82 by welding or the like. When the harness EN passes through the long hole of the harness guide 83, routing of the harness EN is guided. Note that, although the two harness guides 83 are provided in the front-rear direction on the support part 82 in the present embodiment, the number of the installed harness guides 83 is not particularly limited, and may be one or may be three or more.

Furthermore, the present embodiment employs a configuration where a long hole is provided to the one harness guide 83, and the two first harness EN1 and second harness EN2 are passed through the above long hole to collectively route the two first harness EN1 and second harness EN2. However, a configuration may be employed where the harness guides 83 may be provided one by one in association with the two first harness EN1 and second harness EN2, and the harness EN may be passed one by one.

In the present embodiment, as illustrated in Fig. 10, the harness EN extending forward from the lower traveling body 2 is routed through the right arm 55R side with respect to the lift cylinder 52. Hence, the harness guide 83 is supported by the right support part 82 to guide routing of the harness EN. That is, the harness guide 83 is supported by the support part 82 attached to the right protection member 81 that protects the right angle cylinder 53R, and guides routing of the harness EN. The above support part 82 is attached to the right protection member 81 so as to cover at least the upper side of the connection part of the hydraulic hose H (e.g., right angle hydraulic hoses H21 and H22) of the right angle cylinder 53R.

As described above, routing of the harness EN is guided by the harness guide 83 supported by the right support part 82, so that a risk is reduced that the harness EN contacts the right angle cylinder 53R. Accordingly, the risk is reduced that at least one of the harness EN and the right angle cylinder 53R is damaged. Furthermore, the harness EN can be guided by the harness guides 83 so as to avoid contact between the harness EN and the hydraulic hose H (e.g., the second hydraulic hose and the third hydraulic hose) on the lower side. Consequently, damage caused by contact between the harness EN and the hydraulic hose H is also reduced.

Furthermore, in the present embodiment, as illustrated in Fig. 10, the harness guide 83 is disposed so as to overlap the right arm 55R that is the one arm 55 in plan view. In this case, the harness EN to be guided by the harness guides 83 is routed above the right arm 55R. Consequently, even if earth and sand are blown up from below during, for example, leveling work by the blade 51, a risk is reduced that the earth and the sand hit the harness EN. Accordingly, damage of the harness EN caused by the earth and the sand to be blown up is reduced.

### [7. Holding part of harnesses]

As illustrated in Fig. 10, the hydraulic excavator 1 includes a holding part 90. The holding part 90 is disposed in front of the lift cylinder 52 and at the back of the blade 51 to hold the harness EN. The holding part 90 includes a first holding part 91 and a second holding part 92. The first holding part 91 holds the first harness EN1. The second holding part 92 holds the second harness EN2. Note that details of the configuration of the holding part 90 (the first holding part 91 and the second holding part 92) will be described later. The harness EN is held by the holding part 90, so that flutter of the harness EN accompanying a change in posture (a position and an inclination) of the blade 51 is suppressed.

In the present embodiment, as illustrated in Fig. 10, the harness EN extends from the one arm 55 side (right arm 55R side) to the other arm 55 side (left arm 55L side) with respect to the lift cylinder 52 in front of the holding part 90. That is, both the first harness EN1 and the second harness EN2 are routed in an oblique direction with respect to the front-rear direction in plan view. In this case, as illustrated in Fig. 10, the first holding part 91 and the second holding part 92 can be aligned and disposed in the left-right direction, and can be also aligned and disposed in the front-rear direction. Consequently, the degree of freedom in arrangement of the first holding part 91 and the second holding part 92 increases.

By the way, when, for example, the harness EN is routed along the front-rear direction in front of the holding part 90, the first holding part 91 and the second holding part 92 can be aligned and disposed in the left-right direction on the same plane, yet cannot be aligned and disposed in the front-rear direction (because the first holding part 91 and the second holding part 92 interfere with each other). When the harness EN is routed to extend in the oblique direction with respect to the front-rear direction in plan view as in the present embodiment, restriction of the arrangement that does not make it possible to align and dispose the first holding part 91 and the second holding part 92 in the front-rear direction is eliminated.

Furthermore, when the harness EN is routed to extend in the oblique direction through the holding part 90 in the plan view, the harness EN is avoided from being bent at the holding part 90. Consequently, a load (e.g., bending stress) applied to the harness EN at the holding part 90 is reduced, and damage on the harness EN caused by the above load is reduced.

In the present embodiment, the first holding part 91 is disposed on the left side with respect to the second holding part 92. This is because, as illustrated in Fig. 3, the target prism 512 is on the left side with respect to the posture detection sensor 514, and the first harness EN1 can be smoothly guided to the target prism 512 without intersecting the second harness EN2 on a side closer to the front side than the holding part 90. Note that, when the first harness EN1 and the second harness EN2 are allowed to intersect with each other on the side closer to the front side than the holding part 90, the first holding part 91 may be disposed on the right side with respect to the second holding part 92. Furthermore, the first holding part 91 may be disposed in front of or at the back of the second holding part 92 in plan view.

In terms of making it easy to hold the first harness EN1 and the second harness EN2 by the first holding part 91 and the second holding part 92 without causing the first harness EN1 and the second harness EN2 to interfere with each other, the first holding part 91 is desirably disposed to be shifted in the left-right direction or the front-rear direction with respect to the second holding part 92 as in the present embodiment.

### [8. Details of holding part]

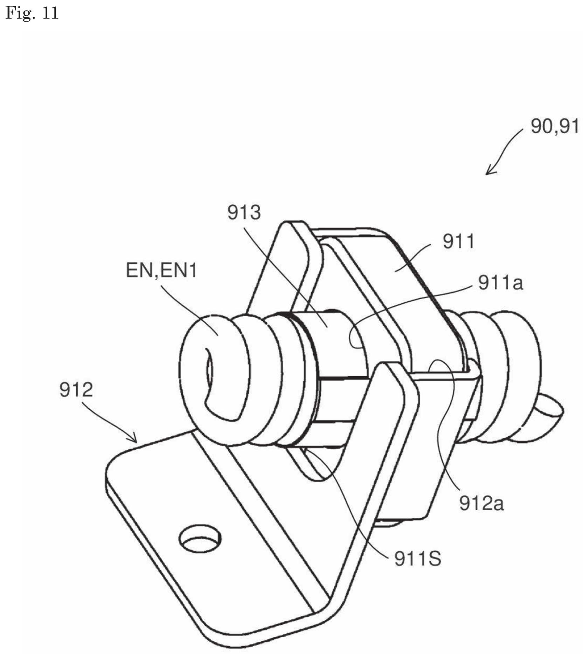

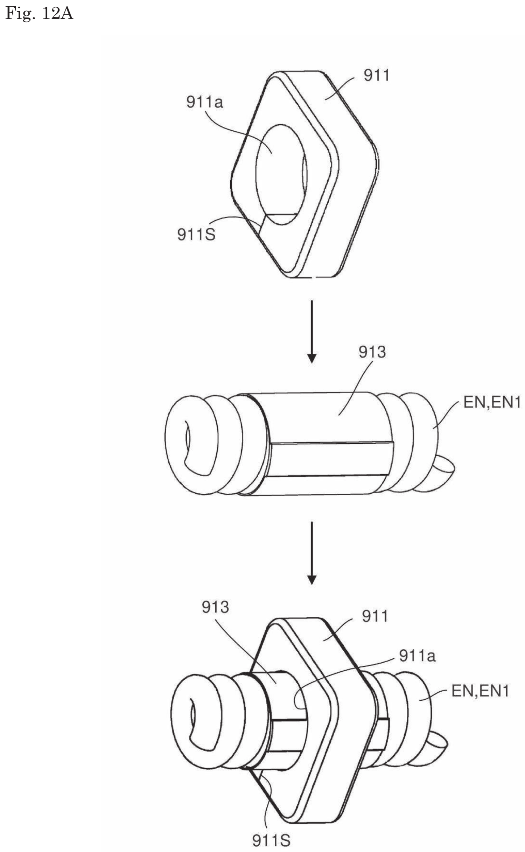

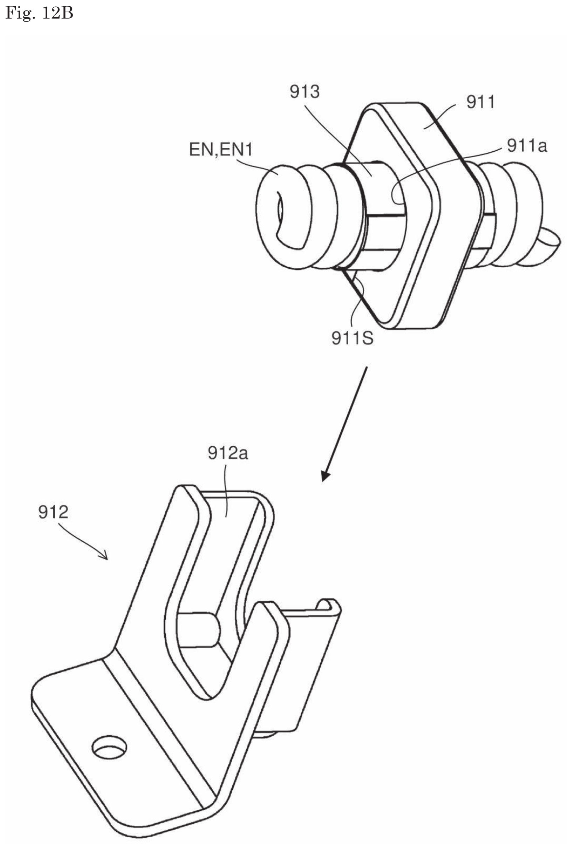

Fig. 11 is a perspective view illustrating an external appearance of the first holding part 91 that constitutes the above holding part 90. Figs. 12A and 12B are exploded perspective views of the first holding part 91. A configuration of the first holding part 91 will be described below. Note that, since the second holding part 92 employs the same configuration as that of the first holding part 91 except that the harness EN to be held is different, description thereof will be omitted here.

The first holding part 91 includes an elastic body 911 and a support body 912. The elastic body 911 is made of, for example, a resin material such as rubber having elasticity. The elastic body 911 includes a through hole 911a through which the harness EN (e.g., first harness EN1) passes. Note that part of the harness EN is formed in a coil shape so as to be extendable and contractable.

The elastic body 911 includes a slit 911S. The slit 911S extends in a radial direction of the through hole 911a to communicate the inside of the through hole 911 a and the outside of the elastic body 911.

The support body 912 is a case that supports elastic body 911, and includes a housing recess part 912a that houses the elastic body 911. The elastic body 911 can be inserted into and removed from the housing recess part 912a from above. The support body 912 is fixed onto the coupling part 551 (see Fig. 10) with a bolt or the like.

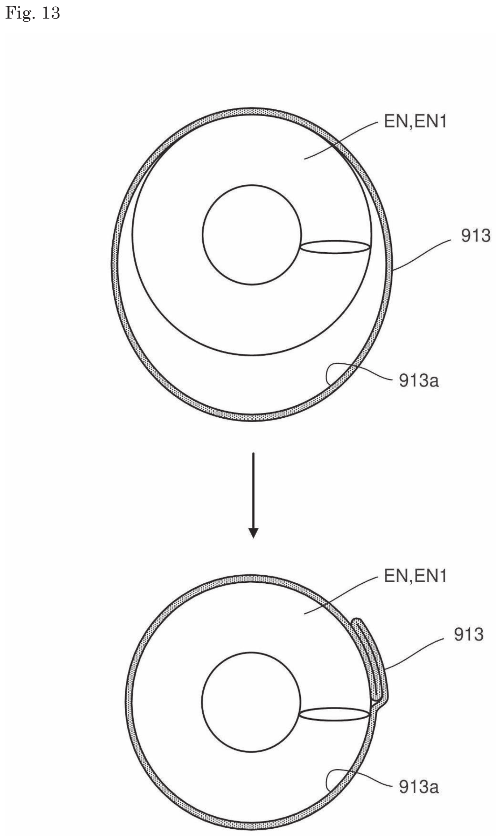

A procedure for causing the holding part 90 to hold the harness EN is as follows. First, as illustrated in Fig. 13, the first harness EN1 is passed through a passage hole 913a of a covering member 913. Furthermore, part of the covering member 913 is folded back in an outer circumferential direction of the coil-shaped first harness EN1. The covering member 913 has a tubular shape and is made of a material that can be folded back as described above. For example, the covering member 913 may be a resin, a cloth, or a metal thin film.

Next, as illustrated in Fig. 12A, the first harness EN1 covered with the covering member 913 is fitted into the through hole 911a of the elastic body 911 via the slit 911S. The elastic body 911 is elastically deformable, and can be deformed in, for example, such a direction that the slit 911S is widened. By widening the slit 911S, the first harness EN1 can be fitted into the through hole 911a of the elastic body 911. Accordingly, it is not necessary to insert the first harness EN1 into the through hole 911a from the end part of the first harness EN1, and it is easy to hold the first harness EN1 by the elastic body 911.

Here, the covering member 913 is folded back in the outer circumferential direction of the coil-shaped first harness EN1 as described above, and is folded back in the direction along the inner circumference of the through hole 911a in the through hole 911a. Hence, a gap between the inner surface of the through hole 911a of the elastic body 911 and the outer circumferential surface of the covering member 913 is reduced by folding the covering member 913. Consequently, the first harness EN1 is stably held by the elastic body 911 without rattling.

Thereafter, as illustrated in Fig. 12B, the elastic body 911 that holds the first harness EN1 is inserted into the housing recess part 912a of the support body 912. By fixing the support body 912 to a predetermined position of the coupling part 551 with a bolt or the like, the first harness EN1 is routed through the first holding part 91.

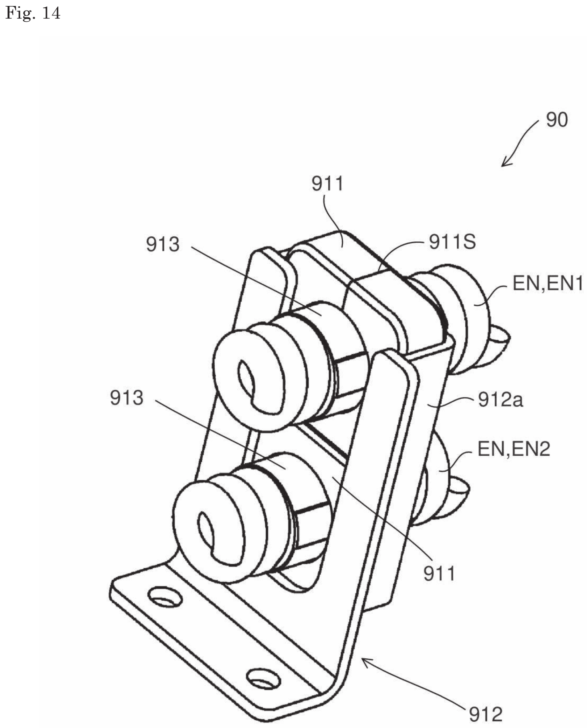

Fig. 14 is a perspective view illustrating another configuration example of the holding part 90. As illustrated in Fig. 14, the holding part 90 may be configured to simultaneously hold the first harness EN1 and the second harness EN2. This holding part 90 can be implemented by preparing the two elastic bodies 911 illustrated in Fig. 11 and the like and forming the vertically long housing recess part 912a of the support body 912. That is, the first harness EN1 is held by the one elastic body 911, the second harness EN2 is held by the other elastic body 911, and the two elastic bodies 911 are vertically aligned and housed in the housing recess part 912a to form the holding part 90 illustrated in Fig. 14. Note that which of the first harness EN1 and the second harness EN2 is disposed above at the holding part 90 in Fig. 14 can be arbitrarily selected.

The configuration in Fig. 14 can hold the first harness EN1 and the second harness EN2 by the one holding part 90, and therefore is advantageous in that the number of the holding parts 90 can be reduced compared to a configuration where the first harness EN1 and the second harness EN2 are individually held by the separate holding parts 90 as in Fig. 11 and the like.

Furthermore, as illustrated in Fig. 14, in the configuration where the holding part 90 aligns and holds the first harness EN1 and the second harness EN2 in the upper-lower direction, the first harness EN1 and the second harness EN2 can be held in a saved space in the front-rear direction and the left-right direction. Hence, for, for example, the small hydraulic excavator 1 in which the installation space of the holding part 90 is narrow, a configuration where the first harness EN1 and the second harness EN2 are simultaneously held using the holding part 90 in Fig. 14 is advantageous.

Note that the holding part 90 may be configured to simultaneously align and hold the first harness EN1 and the second harness EN2 in the oblique direction intersecting the front-rear direction in plan view.

### [9. Supplement]

Although the hydraulic excavator 1 includes an engine 40 (see Fig. 1) as a prime mover, the prime mover may be an electric motor.

The hydraulic excavator 1 may employ a configuration where a hydraulic device such as a hydraulic actuator (e.g., a hydraulic motor and a hydraulic cylinder) and an actuator driven by electric power are used in combination. Examples of the actuator driven by electric power include an electric traveling motor, an electric cylinder, and an electric turning motor.

Although the hydraulic excavator 1 has been described as an example of the working machine in the present embodiment, the working machine is not limited to the hydraulic excavator 1, and may be a construction machine such as a mobile crane. Furthermore, the working machine may be configured such that the upper body does not turn with respect to the lower body.

### [10. Supplementary note]

The working machine (hydraulic excavator 1) described in the present embodiment can be expressed as in the following supplementary notes.

The working machine according to supplementary note (1) includes:
a lower body;
a pair of left and right arms that are attached to the lower body and extend forward; and
a blade that is attached to a distal end side of the arm,
the working machine includes
   a hydraulic hose that extends from the lower body toward the blade, and
   a harness that extends from the lower body toward the blade, and
the hydraulic hose extends along the one arm and is disposed to be shifted from the harness in an upper-lower direction.

The working machine according to supplementary note (2) is the working machine described in supplementary note (1), and
the harness is routed closer to an upper side than the hydraulic hose.

The working machine according to supplementary note (3) is the working machine described in supplementary note (1) or (2), and
further includes a lift cylinder that is disposed between the pair of left and right arms and lifts and lowers the blade in the upper-lower direction, and
the harness is disposed on a side of the one arm with respect to the lift cylinder and extends from the lower body toward the blade.

The working machine according to supplementary note (4) is the working machine described in supplementary note (1) or (2), and
the harness is disposed on a side of the one arm of the pair of left and right arms, and extends from the lower body toward the blade.

The working machine according to supplementary note (5) is the working machine described in any one of supplementary notes (1) to (4), and further includes:
an angle cylinder that is disposed on a lateral side of the one arm and swings left and right end parts of the blade in a front-rear direction;
a protection member that protects the angle cylinder;
a support part that is attached to the protection member; and
a harness guide that is supported by the support part.

The working machine according to supplementary note (6) is the working machine described in supplementary note (5), and
the harness guide is disposed so as to overlap the one arm in plan view.

The working machine according to supplementary note (7) is the working machine described in supplementary note (3), and
further includes a holding part that is disposed in front of the lift cylinder and at a back of the blade and holds the harness.

The working machine according to supplementary note (8) is the working machine described in supplementary note (7), and
the harness extends in front of the holding part and toward the other arm with respect to the lift cylinder.

The working machine according to supplementary note (9) is the working machine described in supplementary note (8),
the harness includes a first harness and a second harness,
the holding part includes
   a first holding part that holds the first harness, and
   a second holding part that holds the second harness, and
the first holding part is disposed to be shifted from the second holding part in a left-right direction or a front-rear direction.

The working machine according to supplementary note (10) is the working machine described in supplementary note (7) or (8),
the harness includes a first harness and a second harness, and
the holding part simultaneously holds the first harness and the second harness.

The working machine according to supplementary note (11) is the working machine described in supplementary note (10), and
the holding part aligns and holds the first harness and the second harness in the upper-lower direction.

The working machine according to supplementary note (12) is the working machine described in any one of supplementary notes (9) to (11), and
further includes a target prism and a posture detection sensor that are attached to the blade,
the first harness is connected with the target prism, and
the second harness is connected with the posture detection sensor.

The working machine according to supplementary note (13) is the working machine described in any one of supplementary notes (1) to (4), and further includes:
an angle cylinder that swings left and right end parts of the blade in a front-rear direction;
a tilt cylinder that swings the left and right end parts of the blade in the upper-lower direction; and
a solenoid valve that switches an oil passage to one of the angle cylinder and the tilt cylinder, and
the hydraulic hose includes a first hydraulic hose that extends from the lower body and is connected with the solenoid valve.

The working machine according to supplementary note (14) is the working machine described in any one of supplementary notes (7) to (11),
the holding part includes
   an elastic body that includes a through hole through which the harness passes, and
   a support body that supports the elastic body in an insertable and removable manner, and
the elastic body includes a slit that extends in a radial direction of the through hole and communicates an inside of the through hole and an outside of the elastic body.

The working machine according to supplementary note (15) is the working machine described in supplementary note (14),
the holding part further includes a covering member that includes a passage hole through which the harness passes and is disposed in the through hole, and
the covering member is disposed in the through hole in a state where part of the covering member is folded back in a direction along an inner circumference of the through hole.

Furthermore, the working machine according to supplementary note (16) includes:
a lower body;
a pair of left and right arms that are attached to the lower body and extend forward; and
a blade that is attached to a distal end side of the arm,
the working machine includes
   an opening part through which a hydraulic hose extends from the lower body toward the blade, and
   a base end part to which a harness extending from the lower body toward the blade is connected, and
the opening part and the base end part are disposed to be shifted in an upper-lower direction.

The working machine according to supplementary note (17) is the working machine described in supplementary note (16), and
the base end part is disposed closer to an upper side than the opening part.

The working machine according to supplementary note (18) is the working machine described in supplementary note (17), and
the opening part is disposed to be shifted to a lateral side with respect to the base end part.

The working machine according to supplementary note (19) is the working machine described in any one of supplementary notes (16) to (18), and
further includes a lift cylinder that is disposed between the pair of left and right arms and lifts and lowers the blade in an upper-lower direction, and
the opening part and the base end part are disposed on a side of the one arm with respect to the lift cylinder.

The working machine according to supplementary note (20) is the working machine described in any one of supplementary notes (16) to (19), and
the base end part is disposed closer to a front side than the opening part.

The working machine according to supplementary note (21) is the working machine described in supplementary note (20), and
the base end part is a connector from which the harness is detachable.

The working machine according to supplementary note (22) is the working machine described in supplementary note (21),
the lower body includes a front wall part that is provided with the opening part,
a housing part is attached to the front wall part, and
the connector is provided at a front end part of the housing part.

The working machine according to supplementary note (23) is the working machine described in supplementary note (22), and
further includes a cable that is provided to extend to an outer side of a lower surface part of the lower body, and
the cable extends from below the housing part to an inside of the housing part, and is connected to the connector from a side opposite to a connection side with the harness.

The working machine according to supplementary note (24) is the working machine described in supplementary note (23),
the housing part includes a cutout part in a bottom surface, and
the cable extends from below the housing part to the inside of the housing part via the cutout part.

The working machine according to supplementary note (25) is the working machine described in any one of supplementary notes (22) to (24), and
the housing part includes
a main body case that includes the connector, and
a lid part that is detachable from the main body case.

The working machine according to supplementary note (26) is the working machine described in any one of supplementary notes (16) to (25), and further includes:
an angle cylinder that swings left and right end parts of the blade in a front-rear direction;
a tilt cylinder that swings the left and right end parts of the blade in the upper-lower direction; and
a solenoid valve that switches an oil passage to one of the angle cylinder and the tilt cylinder, and
the hydraulic hose includes a first hydraulic hose that is connected with the solenoid valve through the opening part.

The working machine according to supplementary note (27) is the working machine described in any one of supplementary notes (16) to (26), and
further includes a target prism and a posture detection sensor that are attached to the blade, and
the harness includes

a first harness that is connected with the target prism, and
a second harness that is connected with the posture detection sensor.

The working machine according to supplementary note (28) is the working machine described in any one of supplementary notes (16) to (19), and further includes:
a lift cylinder that is disposed between the pair of left and right arms and lifts and lowers the blade in an upper-lower direction;
an angle cylinder that swings left and right end parts of the blade in a front-rear direction;
a tilt cylinder that swings the left and right end parts of the blade in the upper-lower direction;
a solenoid valve that switches an oil passage to one of the angle cylinder and the tilt cylinder;
a lift hydraulic hose that is connected with the lift cylinder;
a lift hose insertion hole through which the lift hydraulic hose extends from the lower body toward the lift cylinder;
a control harness that sends an electric signal for switching the oil passage to the solenoid valve; and
a harness insertion hole through which the control harness extends from the lower body toward the blade, and
the lift opening part and the harness insertion hole are arranged to be shifted in an upper-lower direction.

Although the embodiment of the present invention has been described above, the scope of the present invention is not limited thereto, and may be expanded or modified without departing from the gist of the invention.

### [Industrial Applicability]

The present invention is usable for working machines such as construction machines, for example.

### LIST OF REFERENCE SIGNS

- 1: Hydraulic excavator (working machine)
- 2: Lower traveling body (lower body)
- 24D: Lower surface part
- 51: Blade
- 52: Lift cylinder
- 53: Angle cylinder
- 53L: Left angle cylinder
- 53R: Right angle cylinder
- 54: Tilt cylinder
- 55: Arm
- 55R: Right arm
- 56: Housing part
- 56F: Front end part
- 56a: Main body case
- 56b: Lid part
- 55L: Left arm
- 55R: Right arm
- 72: Solenoid valve
- 81: Protection member
- 82: Support part
- 83: Harness guide
- 90: Holding part
- 91: First holding part
- 92: Second holding part
- 512: Target prism
- 561: Bottom surface
- 561C: Cutout part
- BE: Base end part
- BE1: First base end part
- BE2: Second base end part
- CA: Cable
- CN: Connector
- CN1: First connector
- CN2: Second connector
- 514: Posture detection sensor
- EN: Harness
- EN1: First harness
- EN2: Second harness
- H: Hydraulic hose
- H1: Shared hydraulic hose (first hydraulic hose)
- H2: Shared hydraulic hose (first hydraulic hose)

## Claims

1. A working machine comprising:
a lower body;
a pair of left and right arms that are attached to the lower body and extend forward; and
a blade that is attached to a distal end side of the arm,
wherein the working machine includes
a hydraulic hose that extends from the lower body toward the blade, and
a harness that extends from the lower body toward the blade, and
the hydraulic hose extends along the one arm and is disposed to be shifted from the harness in an upper-lower direction.

2. The working machine according to claim 1, wherein the harness is routed closer to an upper side than the hydraulic hose.

3. The working machine according to claim 1, further comprising a lift cylinder that is disposed between the pair of left and right arms and lifts and lowers the blade in the upper-lower direction,
wherein the harness is disposed on a side of the one arm with respect to the lift cylinder and extends from the lower body toward the blade.

4. The working machine according to claim 1, wherein the harness is disposed on a side of the one arm of the pair of left and right arms, and extends from the lower body toward the blade.

5. The working machine according to claim 1, further comprising:
an angle cylinder that is disposed on a lateral side of the one arm and swings left and right end parts of the blade in a front-rear direction;
a protection member that protects the angle cylinder;
a support part that is attached to the protection member; and
a harness guide that is supported by the support part.

6. The working machine according to claim 5, wherein the harness guide is disposed so as to overlap the one arm in plan view.

7. The working machine according to claim 3, further comprising a holding part that is disposed in front of the lift cylinder and at a back of the blade and holds the harness.

8. The working machine according to claim 7, wherein the harness extends in front of the holding part and toward the other arm with respect to the lift cylinder.

9. The working machine according to claim 8, wherein
the harness includes a first harness and a second harness,
the holding part includes
a first holding part that holds the first harness, and
a second holding part that holds the second harness, and
the first holding part is disposed to be shifted from the second holding part in a left-right direction or a front-rear direction.

10. The working machine according to claim 7, wherein
the harness includes a first harness and a second harness, and
the holding part simultaneously holds the first harness and the second harness.

11. The working machine according to claim 10, wherein the holding part aligns and holds the first harness and the second harness in the upper-lower direction.

12. The working machine according to claim 9, further comprising a target prism and a posture detection sensor that are attached to the blade,
wherein the first harness is connected with the target prism, and
the second harness is connected with the posture detection sensor.

13. The working machine according to any one of claims 1 to 4, further comprising:
an angle cylinder that swings left and right end parts of the blade in a front-rear direction;
a tilt cylinder that swings the left and right end parts of the blade in the upper-lower direction; and
a solenoid valve that switches an oil passage to one of the angle cylinder and the tilt cylinder,
wherein the hydraulic hose includes a first hydraulic hose that extends from the lower body and is connected with the solenoid valve.

14. The working machine according to claim 2, wherein the base end part is disposed closer to a front side than the opening part.

15. The working machine according to claim 14, wherein the base end part is a connector from which the harness is detachable.

16. The working machine according to claim 15, wherein
the lower body includes a front wall part that is provided with the opening part, a housing part is attached to the front wall part, and
the connector is provided to a front end part of the housing part.

17. The working machine according to claim 16, further comprising a cable that is provided to extend to an outer side of a lower surface part of the lower body,
wherein the cable extends from below the housing part to an inside of the housing part, and is connected to the connector from a side opposite to a connection side with the harness.

18. The working machine according to claim 17, wherein
the housing part includes a cutout part in a bottom surface, and
the cable extends from below the housing part to the inside of the housing part through the cutout part.

19. The working machine according to claim 2, further comprising:
an angle cylinder that swings left and right end parts of the blade in a front-rear direction;
a tilt cylinder that swings the left and right end parts of the blade in the upperlower direction; and
a solenoid valve that switches an oil passage to one of the angle cylinder and the tilt cylinder,
wherein the hydraulic hose includes a first hydraulic hose that is connected with the solenoid valve through the opening part.

20. The working machine according to claim 19, further comprising a target prism and a posture detection sensor that are attached to the blade,
wherein the harness includes
a first harness that is connected with the target prism, and
a second harness that is connected with the posture detection sensor.
